# EUROPÄISCHE PATENTANMELDUNG

(11) **EP 1 705 047 A2**
(43) Veröffentlichungstag der Anmeldung: **27.09.2006**
(21) Anmeldenummer: 06111535.8
(22) Anmeldetag: 22.03.2006
(51) Int. Cl.: B60J 10/00

(54) **Dichtungsanordnung, insbesondere zum Abdichten einer Fensterscheibe eines Kraftfahrzeugs**

(30) Priorität: 23.03.2005 DE 102005013507
(71) Anmelder: Metzeler Automotive Profile Systems GmbH, 88131 Lindau/Bodensee (DE)
(72) Erfinder: Fellner, Johannes, 88142, Wasserburg (DE); Bauhofer, Lothar-Josef, 88111, Lindau (DE)
(74) Vertreter: Schober, Christoph D.

(57) **Zusammenfassung**

Eine Dichtungsanordnung, die insbesondere zum Abdichten einer Fensterscheibe (12) eines Kraftfahrzeugs (10) dient, ist mit einer Dichtung (20), die durch Extrusion gefertigt ist, und einem Formteil (30), das stoffschlüssig mit der Dichtung (20) verbunden ist, versehen. Um bei einer ausreichenden Dichtwirkung und angemessenen Schalldämpfung eine vergleichsweise einfache und kostengünstige Herstellung zu erzielen, weist das Formteil (30) eine erste Komponente (31), die aus einem ersten Werkstoff besteht, und eine zweite Komponente (37), die aus einem zweiten Werkstoff besteht, der eine geringere Härte als der erste Werkstoff hat, auf. Der erste Werkstoff ist ein Elastomer, wohingegen der zweite Werkstoff ein Schaumstoff ist.

## Beschreibung

Die Erfindung betrifft eine Dichtungsanordnung, die insbesondere zum Abdichten einer Fensterscheibe eines Kraftfahrzeugs dient. Die Dichtungsanordnung weist eine Dichtung auf, die durch Extrusion gefertigt ist. Zudem ist die Dichtungsanordnung mit einem Formteil versehen, das stoffschlüssig mit der Dichtung verbunden ist.

Eine solche Dichtungsanordnung wird in der US 4,183,778 beschrieben. Die Dichtungsanordnung weist zwei unter einem Winkel zusammenstossende Dichtungsstränge auf, die sich jeweils aus einem Dichtungsabschnitt und einem Befestigungsabschnitt zusammensetzen. Die Dichtungsstränge bilden eine Gehrung und sind im Bereich der Gehrung durch eine Eckverbindung miteinander verbunden. Die Eckverbindung ist eine durch Spritzgiessen eines thermoplastischen Kunststoffes erzeugte Verdickung.

Eine Dichtungsanordnung, die sich aus einer zwei eine Gehrung bildende Dichtungsstränge aufweisenden Dichtung und einem Formteil zusammensetzt, wird ferner in der EP 0 662 400 B1 beschrieben. Das aus einem biegsamen Werkstoff bestehende Formteil überlappt einen Bereich der Dichtung und ist durch ein Heissformverfahren an einem begrenzten Teil dieses Überlappungsgebiets an die Dichtung angeformt. Auf diese Weise ist es möglich, dass das Formteil eine erste Position und eine zweite Position relativ zu der Dichtung einnehmen kann. Die erste Position stellt eine Betriebsposition während des Heissformverfahrens dar, wobei das Formteil in der ersten Position über den grössten Teil des Überlappungsbereiches von der Dichtung beabstandet ist, so dass die Dichtung vor Beschädigungen durch die während des Heissformverfahrens auftretende Hitze geschützt wird. Die zweite Position wird nach der Beendigung des Heissformverfahrens eingenommen, wobei in der zweiten Position das Formteil entlang des Überlappungsbereiches unmittelbar an der Dichtung anliegt.

Weiterhin offenbart die DE 199 61 873 A1 eine Eckenausbildung an einem Fensterrahmen der Tür eines Kraftfahrzeugs, die ein mit einem Rahmen verbundenes Dreieckblech aufweist. Auf das Dreieckblech ist eine zur Aussenseite der Tür weisende Dreieckblende aufgesetzt, die mit dem Dreieckblech und dem Rahmen verbunden ist. Für die Verbindung mit dem Rahmen weist die Dreieckblende einen Haltesteg auf, der in einen hinterschnittenen Abschnitt des Rahmens eingreift. Für die Befestigung an dem Dreieckblech ist die Dreieckblende mit einem Clip versehen, der in eine Ausnehmung des Dreieckblechs eingreift. Die Dreieckblende ist ausserdem mit Ausnehmungen versehen, die dazu dienen, eine Dichtung formschlüssig zu befestigen.

Darüber hinaus wird eine Dichtung, die zum Abdichten einer Tür, einer Fensterscheibe oder des Daches eines Kraftfahrzeugs dient, in der EP 1 419 919 A1 beschrieben. Die Dichtung weist einen Grundkörper auf, der aus einem ersten elastisch verformbaren Werkstoff gefertigt ist. Der Grundkörper ist mit einem Dichtungsabschnitt und einem Befestigungsabschnitt versehen. Der Befestigungsabschnitt ist mit einem Adhäsionskörper verbunden, durch den der Grundkörper stoffschlüssig an einem Bauteil befestigt wird. Um eine in wirtschaftlicher Hinsicht vergleichsweise kostengünstige Herstellung zu erzielen, besteht der Adhäsionskörper aus einem zweiten elastisch verformbaren Werkstoff, der über eine zellige Struktur verfügt. Bei dem ersten elastisch verformbaren Werkstoff kann es sich um einen thermoplastischen Kunststoff, Ethylen-Propylen-Dien-Kautschuk, oder um einen siliziumhaltigen Kunststoff handeln, wohingegen der zweite elastisch verformbare Werkstoff Zellgummi sein kann.

Der Hauptzweck des Formteils der bekannten Dichtungsanordnungen besteht darin, zwei in der Regel durch Extrusion gefertigte Dichtungsstränge im Bereich eines unstetigen Verlaufs der Karosserie eines Kraftfahrzeugs, zum Beispiel in Ecken, miteinander zu verbinden. Das Formteil ist daher so auszugestalten, dass die Dichtfunktion der Dichtungstränge erhalten bleibt. Darüber hinaus dient das Formteil dazu, Öffnungen, die sich aufgrund des unstetigen Verlaufs der Karosserie ergeben, zu verschliessen. Das Verschliessen der Öffnungen gewährleistet zum einen ein in ästhetischer Hinsicht ansprechendes optisches Erscheinungsbild. Zum anderen trägt das Verschliessen der Öffnungen zu einer Schalldämpfung bei. Eine wirksame Schalldämpfung lässt sich bislang allerdings nur dann erreichen, wenn zwischen dem Formteil und der Karosserie Einlegeteile eingesetzt werden, die aus einem schallabsorbierenden Werkstoff bestehen. Das Vorsehen dieser separaten Einlegeteile bringt eine vergleichsweise hohe Anzahl an Bauteilen mit sich und erfordert demzufolge eine verhältnismässig aufwendige Montage und kostspielige Lagerhaltung.

Der Erfindung liegt die Aufgabe zugrunde, eine Dichtungsanordnung der eingangs genannten Art dahingehend weiterzubilden, dass sich bei einer ausreichenden Dichtwirkung und angemessenen Schalldämpfung eine vergleichsweise einfache und kostengünstige Herstellung erzielen lässt.

Diese Aufgabe wird durch eine Dichtungsanordnung mit den Merkmalen gemäss Anspruch 1 **gelöst.** Bevorzugte Ausgestaltungen der erfindungsgemässen Dichtungsanordnung finden ihren Niederschlag in den Ansprüchen 2 bis 18.

Die erfindungsgemässe Dichtungsanordnung beruht auf der Erkenntnis, das Formteil bei einteiliger Ausgestaltung aus einer ersten Komponente und einer zweiten Komponente zusammenzusetzen, um auf diese Weise die separaten Einlegeteile entbehrlich zu machen und damit eine vergleichsweise einfache und kostengünstige Herstellung sicherzustellen. Die erste Komponente, die aus einem ersten Werkstoff besteht, der ein Elastomer ist, zum Beispiel Ethylen-Propylen-Dien-Kautschuk (EPDM) oder ein Thermoplast (TPE), hat vorteilhafterweise eine Härte von ca. 40 SHA bis ca. 95 SHA und wird beispielsweise durch Spritzgiessen gefertigt. Die erste Komponente ist stoffschlüssig mit der Dichtung verbunden und stellt eine ausreichende Dichtwirkung sicher. Demgegenüber trägt die zweite Komponente, die aus einem zweiten Werkstoff besteht, der eine geringere Härte als der erste Werkstoff hat, zum Beispiel ca. 10 SHA bis ca, 70 SHA, zu einer angemessenen Schalldämpfung bei. Der zweite Werkstoff ist aus diesem Grund ein Schaumstoff, vorzugsweise ein Polyurethan-Schaumstoff, der eine hinreichende Schallabsorption gewährleistet.

Vorteilhaft sind die erste Komponente und die zweite Komponente stoffschlüssig miteinander verbunden. Dies lässt sich beispielsweise dadurch erreichen, dass zunächst die erste Komponente durch Spritzgiessen gefertigt, und anschliessend in einem weiteren Verfahrensschritt die zweite Komponente geschäumt und auf diese Weise mit der ersten Komponente stoffschlüssig verbunden wird.

In einer bevorzugten Ausgestaltung der erfindungsgemässen Dichtungsanordnung weist die erste Komponente einen Kanal auf, der geeignet ist, den Rand einer Fensterscheibe aufzunehmen. Eine zuverlässige Abdichtung von beispielsweise der Fensterscheibe ergibt sich dann, wenn die erste Komponente zweckmässigerweise mit wenigstens einer Dichtlippe versehen ist.

Bevorzugt weist die Dichtungsanordnung einen Rahmen auf, an dem die Dichtung und/oder das Formteil befestigt sind. Der beispielsweise aus Metall bestehende Rahmen kann Bestandteil der Karosserie eines Kraftfahrzeugs sein. Um eine einfache Befestigung des Formteils an dem Rahmen zu gewährleisten, weist der Rahmen vorteilhaft einen Flansch auf und ist die erste Komponente mit einer Aussparung versehen, die es ermöglicht, den Flansch formschlüssig in der Aussparung anzuordnen. Das Formteil kann auf diese Weise auf den Rahmen aufgesteckt werden.

Bevorzugt weist der Rahmen eine Stützfläche auf, an welcher die zweite Komponente angrenzt. Die Stützfläche stützt die zweite Komponente ab und trägt damit zu einer zuverlässigen Positionierung des Formteils an dem Rahmen bei.

In einer bevorzugten Ausgestaltung der erfindungsgemässen Dichtungsanordnung ist die zweite Komponente mit einem Verbindungsabschnitt, der mit der ersten Komponente verbunden ist, und einem Stützabschnitt, der an die Stützfläche angrenzt, versehen. Der Verbindungsabschnitt weist eine Grundfläche auf, die sich in einer Verbindungsebene erstreckt. Der Stützabschnitt ragt in einem vorgegebenen Winkel aus der Verbindungsebene heraus. Der Verbindungsabschnitt gewährleistet ein flächiges Angrenzen der zweiten Komponente an die erste Komponente und stellt auf diese Weise einen zuverlässigen Stoffschluss sicher. Der vorzugsweise orthogonal aus der Verbindungsebene herausragende Stützabschnitt kann eine an den jeweiligen Anwendungsfall angepasste Form aufweisen und ist vorteilhaft als Hohlraum ausgestaltet. Die Ausgestaltung als ein im wesentlichen orthogonal zu der Verbindungsebene verlaufender Hohlraum gewährleistet eine relativ hohe Verformungsfähigkeit des Stützabschnitts. Der Stützabschnitt stellt zum einen einen festen Sitz des Formteils an dem Rahmen sicher und ermöglicht zum anderen, Unebenheiten des Rahmens zu kompensieren. In diesen Zusammenhang hat es sich als vorteilhaft erwiesen, dass sich das Formteil aufgrund der dem Stützabschnitt immanenten Verformungsfähigkeit so an dem Rahmen anordnen lässt, dass sich eine Überdeckung von beispielsweise ca. 1 mm bis ca. 6 mm ergibt, die zu einer Stauchung des Stützabschnitts führt.

Zu einer zuverlässigen Verbindung von Formteil und Dichtung trägt bei, wenn vorteilhaft die Grundfläche des Verbindungsabschnitts die erste Komponente in der Verbindungsebene überragt. Die sich auf diese Weise ergebende Überlappung von Formteil und Dichtung trägt zum einen zu einer zuverlässigen stoffschlüssigen Verbindung und zum anderen zu einer wirksamen Schalldämpfung bei.

In einer bevorzugten Ausgestaltung der erfindungsgemässen Dichtungsanordnung setzt sich die Dichtung aus einem ersten Dichtungsstrang und einem zweiten Dichtungsstrang zusammen. Der erste Dichtungsstrang und der zweite Dichtungsstrang sind durch das Formteil miteinander verbunden und können in einem Winkel von beispielsweise ca. 90° angeordnet sein. In Abhängigkeit vom jeweiligen Anwendungsfall kann sich die Dichtung auch aus drei oder mehreren Dichtungssträngen zusammensetzen, die durch das Formteil miteinander verbunden werden.

Einzelheiten und weitere Vorteile der erfindungsgemässen Dichtungsanordnung ergeben sich aus der nachfolgenden Beschreibung eines bevorzugten Ausführungsbeispieles. In den das Ausführungsbeispiel lediglich schematisch darstellenden Zeichnungen veranschaulichen im allgemeinen:
- Fig. 1: eine Seitenansicht eines Kraftfahrzeugs;
- Fig. 2: einen Schnitt gemäss der Linie II-II in den Fig, 1 und 3, der die erfindungsgemässe Dichtungsanordnung zeigt, und
- Fig. 3: einen Schnitt gemäss der Linie III-III in Fig. 2.

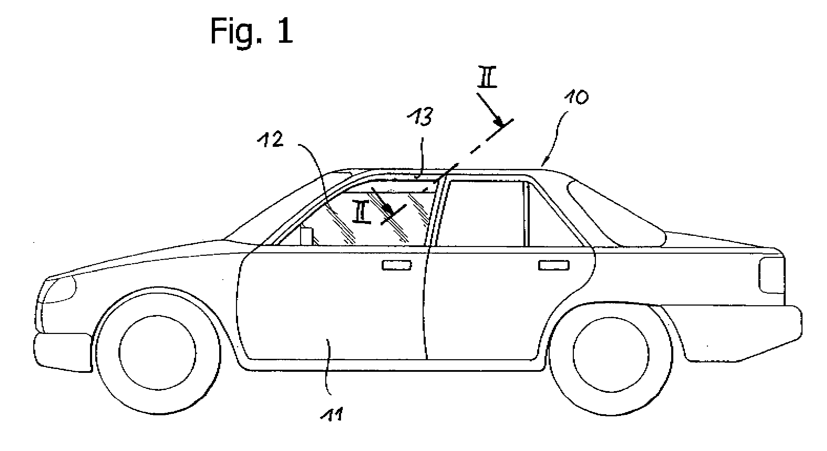

Das in Fig. 1 dargestellte Kraftfahrzeug 10 weist eine Tür 11 auf, die mit einem Rahmen 13 versehen ist. Der Rahmen 13 fasst eine durch einen Elektromotor angetriebene Fensterscheibe 12 ein, die sich in einem Fensterschacht der Tür 11 versenken lässt. Entlang des Rahmens 13 ist eine Dichtung 20 angeordnet, die dazu dient, die Fensterscheibe 12 abzudichten. Die Dichtung 20 weist einen ersten Dichtungsstrang 21 und einen zweiten Dichtungsstrang 22 auf, die aus einem elastomeren Werkstoff extrudiert sind und im Bereich einer Ecke des Rahmens 13 in einem Winkel a von ca. 90° aneinandergrenzen. Der erste Dichtungsstrang 21 und der zweite Dichtungsstrang 22 sind stoffschlüssig durch ein Formteil 30 miteinander verbunden.

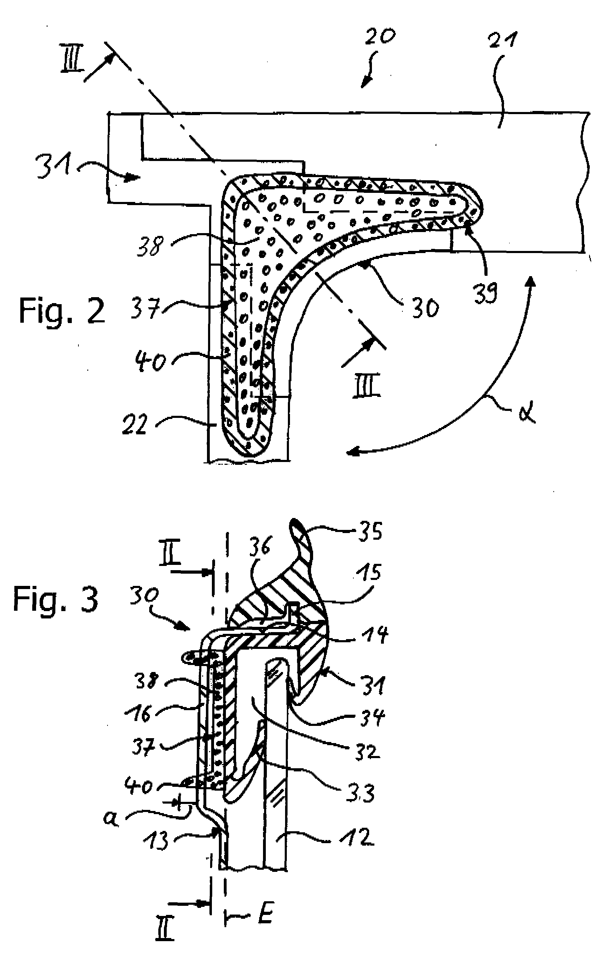

Wie insbesondere die Fig. 2 und 3 zu erkennen geben, setzt sich das Formteil 30 aus einer ersten Komponente 31, die aus EPDM oder TPE besteht und durch Spritzgiessen gefertigt ist, und einer zweiten Komponente 37, die aus einem Schaumstoff, beispielsweise einem Polyurethan-Schaumstoff, besteht, zusammen. Die erste Komponente 31 hat eine Härte von ca. 40 SHA bis ca. 95 SHA, wohingegen die zweite Komponente 37 eine geringere Härte von ca. 10 SHA bis ca. 70 SHA hat.

Die erste Komponente 31 weist einen Kanal 32 auf, der dazu dient, den Rand der Fensterscheibe 12 aufzunehmen, wie insbesondere aus Fig. 3 ersichtlich ist. Im Bereich des Kanals 32 ist die erste Komponente 31 zudem mit Dichtlippen 33, 34 versehen, die dazu dienen, die Fensterscheibe abzudichten. Ist, wie im vorliegenden Fall, die Fensterscheibe 12 bewegbar angeordnet, können die Dichtlippen 33, 34 mit einer reibungsvermindernden Beschichtung oder Beflockung versehen sein. Die erste Komponente 31 weist zudem eine Dichtlippe 35 auf, die dazu dient, die Tür 11 gegenüber dem Dach des Kraftfahrzeugs 10 abzudichten. Die erste Komponente 31 ist im Bereich der Dichtlippe 35 mit einer Aussparung 36 versehen, in die ein Flansch 14 des Rahmens 13 eingreift. Um einen zuverlässigen Formschluss zwischen der ersten Komponente 31 und dem Rahmen 13 sicherzustellen, ist der Flansch 14 mit einem Vorsprung 15 versehen.

Die zweite Komponente 37 setzt sich aus einem Verbindungsabschnitt 38 und einem Stützabschnitt 40 zusammen. Der Verbindungsabschnitt 38 weist eine Grundfläche 39 auf, die sich in einer Verbindungsebene E erstreckt und an der ersten Komponente 31 anliegt. Der Stützabschnitt 40 ragt im wesentlichen orthogonal aus der Verbindungsebene E heraus und grenzt an eine Stützfläche 16 des Rahmens 13 an. Die Fig. 2 und 3 geben zu erkennen, dass der Stützabschnitt 14 einen Hohlraum bildet und auf diese Weise über eine vergleichsweise hohe Verformungsfähigkeit verfügt. Diese Verformungsfähigkeit ermöglicht es, den Stützabschnitt 40 so zu dimensionieren, dass sich eine Überdeckung a zwischen dem Formteil 30 und dem Rahmen 13 ergibt, wie in Fig. 3 zu erkennen ist. Die beispielsweise zwischen ca. 1 mm und ca, 6 mm betragende Überdeckung a hat zur Folge, dass bei der Befestigung des Formteils 30 an dem Rahmen 13 der Stützabschnitt 40 gestaucht wird und auf diese Weise zu einem festen Sitz des Formteils 30 an dem Rahmen 13 beiträgt. Darüber hinaus ermöglicht es die Überdeckung a, Unebenheiten des Rahmens 13 zu kompensieren.

Das Formteil 30 wird zunächst stoffschlüssig mit dem ersten Dichtungsstrang 21 und dem zweiten Dichtungsstrang 22 verbunden, indem zum Beispiel der erste Dichtungsstrang 21 und der zweite Dichtungsstrang 22 in ein Werkzeug eingelegt werden und die erste Komponente 31 durch Spritzgiessen erzeugt wird. Die erste Komponente 31 und die zweite Komponente 37 werden anschliessend stoffschlüssig miteinander verbunden, indem die aus dem ersten Dichtungsstrang 21, dem zweiten Dichtungsstrang 22 und der ersten Komponente 31 bestehende Baueinheit in ein Werkzeug eingelegt wird, in welchem die zweite Komponente 37 geschäumt wird. Dieses Werkzeug kann dasselbe Werkzeug sein, in welchem die erste Komponente 31 spritzgegossen wird. Wie aus Fig. 2 ersichtlich ist, überragt die Grundfläche 39 des Verbindungsabschnitts 38 der zweiten Komponente 37 die erste Komponente 31 in der Verbindungsebene E, und zwar derart, dass der Verbindungsabschnitt 38 sowohl den ersten Dichtungsstrang 21 als auch den zweiten Dichtungsstrang 22 überlappt. Diese Überlappung trägt zu einem zuverlässigen Stoffschluss zwischen dem Formteil 30 und der Dichtung 20 und einer wirksamen Schalldämpfung bei.

Die zuvor beschriebene Dichtungsanordnung gewährleistet zum einen eine ausreichende Dichtwirkung und zum anderen eine angemessene Schalldämpfung. Die ausreichende Dichtwirkung ist vor allem darauf zurückzuführen, dass der erste Dichtungsstrang 21 und der zweite Dichtungsstrang 22 durch die erste Komponente 31 des Formteils 30 zuverlässig miteinander verbunden werden. Zu einer ausreichenden Dichtwirkung und wirksamen Schalldämpfung trägt zudem bei, dass die erste Komponente 31 mit dem den Rand der Fensterscheibe 12 aufnehmenden Kanal 32 und den Dichtlippen 33 bis 35 versehen ist. Einen Beitrag für eine ausreichende Schalldämpfung leistet zudem die zweite Komponente 37, die aus Schaumstoff und damit einem schallabsorbierenden Werkstoff besteht. Nicht zuletzt zeichnet sich die Dichtungsanordnung durch eine vergleichsweise einfache und kostengünstige Herstellung aus, indem das Formteil 30 zwar funktionell in die erste Komponente 31 und die zweite Komponente 37 unterteilt ist, aber eine einteilige Baueinheit darstellt, die sich einfach und schnell montieren lässt und keine aufwendige Lagerhaltung erfordert.

### Bezugszeichenliste

- 10: Kraftfahrzeug
- 11: Tür
- 12: Fensterscheibe
- 13: Rahmen
- 14: Flansch
- 15: Vorsprung
- 16: Stützfläche

- 20: Dichtung
- 21: erster Dichtungsstrang
- 22: zweiter Dichtungsstrang

- 30: Formteil
- 31: erste Komponente
- 32: Kanal
- 33: Dichtlippe
- 34: Dichtlippe
- 35: Dichtlippe
- 36: Aussparung
- 37: zweite Komponente
- 38: Verbindungsabschnitt
- 39: Grundfläche
- 40: Stützabschnitt

- α: Winkel
- a: Überdeckung
- E: Verbindungsebene

## Patentansprüche

1. Dichtungsanordnung, insbesondere zum Abdichten einer Fensterscheibe (12) eines Kraftfahrzeugs (10), mit einer Dichtung (20), die durch Extrusion gefertigt ist, und einem Formteil (30), das stoffschlüssig mit der Dichtung (20) verbunden ist, **dadurch gekennzeichnet, dass** das Formteil (30) eine erste Komponente (31), die aus einem ersten Werkstoff besteht, und eine zweite Komponente (37), die aus einem zweiten Werkstoff besteht, der eine geringere Härte als der erste Werkstoff hat, aufweist, wobei der erste Werkstoff ein Elastomer ist und der zweite Werkstoff ein Schaumstoff ist.

2. Dichtungsanordnung nach Anspruch 1, **dadurch gekennzeichnet, dass** der erste Werkstoff eine Härte von ca. 40 SHA bis ca. 95 SHA hat.

3. Dichtungsanordnung nach Anspruch 1 oder 2, **dadurch gekennzeichnet, dass** der erste Werkstoff Ethylen-Propylen-Dien-Kautschuk oder ein Thermoplast ist.

4. Dichtungsanordnung nach einem der Ansprüche 1 bis 3, **dadurch gekennzeichnet, dass** der zweite Werkstoff eine Härte von ca. 10 SHA bis ca. 70 SHA hat,

5. Dichtungsanordnung nach Anspruch 4, **dadurch gekennzeichnet, dass** der zweite Werkstoff ein polymerer Schaumstoff, vorzugsweise ein Polyurethan-Schaumstoff, ist.

6. Dichtungsanordnung nach einem der Ansprüche 1 bis 5, **dadurch gekennzeichnet, dass** die erste Komponente (31) und die zweite Komponente (37) stoffschlüssig miteinander verbunden sind.

7. Dichtungsanordnung nach einem der Ansprüche 1 bis 6, **dadurch gekennzeichnet, dass** die erste Komponente (31) einen Kanal (32) aufweist, der geeignet ist, den Rand einer Fensterscheibe (12) aufzunehmen.

8. Dichtungsanordnung nach einem der Ansprüche 1 bis 7, **dadurch gekennzeichnet, dass** die erste Komponente (31) mit wenigstens einer Dichtlippe (33, 34, 35) versehen ist.

9. Dichtungsanordnung nach einem der Ansprüche 1 bis 8, **gekennzeichnet durch** einen Rahmen (13), an dem die Dichtung (20) oder das Formteil (30) befestigt sind.

10. Dichtungsanordnung nach Anspruch 9, **dadurch gekennzeichnet, dass** der Rahmen (13) einen Flansch (14) aufweist und die erste Komponente (31) mit einer Aussparung (36) versehen ist, wobei der Flansch (14) formschlüssig in der Aussparung (36) angeordnet ist.

11. Dichtungsanordnung nach Anspruch 9 oder 10, **dadurch gekennzeichnet, dass** der Rahmen (13) eine Stützfläche (16) aufweist, an welche die zweite Komponente (37) angrenzt.

12. Dichtungsanordnung nach Anspruch 11, **dadurch gekennzeichnet, dass** die zweite Komponente (37) einen Verbindungsabschnitt (38), der mit der ersten Komponente (31) verbunden ist, und einen Stützabschnitt (40), der an die Stützfläche (16) angrenzt, aufweist.

13. Dichtungsanordnung nach Anspruch 12, **dadurch gekennzeichnet, dass** der Verbindungsabschnitt (38) eine Grundfläche (39) aufweist, die sich in einer Verbindungsebene (E) erstreckt, und der Stützabschnitt (40) in einem vorgegebenen Winkel aus der Verbindungsebene (E) herausragt.

14. Dichtungsanordnung nach Anspruch 13, **dadurch gekennzeichnet, dass** der Stützabschnitt (40) einen im wesentlichen orthogonal aus der Verbindungsebene (E) herausragenden Hohlraum bildet.

15. Dichtungsanordnung nach Anspruch 13 oder 14, **dadurch gekennzeichnet, dass** die Grundfläche (39) des Verbindungsabschnitts (38) die erste Komponente (31) in der Verbindungsebene (E) überragt.

16. Dichtungsanordnung nach einem der Ansprüche 1 bis 15, **dadurch gekennzeichnet, dass** die Dichtung (20) einen ersten Dichtungsstrang (21) und einen zweiten Dichtungsstrang (22) aufweist, wobei der erste Dichtungsstrang (21) und der zweite Dichtungsstrang (22) durch das Formteil (30) miteinander verbunden sind.

17. Dichtungsanordnung nach Anspruch 16, **dadurch gekennzeichnet, dass** der erste Dichtungsstrang (21) und der zweite Dichtungsstrang (22) in einem Winkel (α) zueinander angeordnet sind.

18. Dichtungsanordnung nach Anspruch 17, **dadurch gekennzeichnet, dass** der Winkel (α) ca. 90 ° beträgt.
